# EUROPÄISCHE PATENTSCHRIFT

(11) **EP 1 256 701 B1**
(45) Veröffentlichungstag und Bekanntmachung des Hinweises auf die Patenterteilung: **30.06.2004**
(21) Anmeldenummer: 02007801.0
(22) Anmeldetag: 06.04.2002
(51) Int. Cl.: F02B 27/02

(54) **Sauganlage für eine Brennkraftmaschine**
Intake system for an internal combustion engine
Système d'alimentation pour un moteur à combustion interne

(30) Priorität: 12.05.2001 DE 10123185
(43) Veröffentlichungstag der Anmeldung: 13.11.2002
(73) Patentinhaber: Bayerische Motoren Werke Aktiengesellschaft, 80809 München (DE)
(72) Erfinder: Lang, Heinz, 85253 Erdweg (DE)

(56) Entgegenhaltungen:
- DE-A- 4 102 453
- DE-A- 19 634 913
- DE-A- 19 728 600

## Beschreibung

Die Erfindung betrifft eine Sauganlage für eine Brennkraftmaschine gemäß der im Oberbegriff des Patentanspruchs 1 beschriebenen Bauart.

Die Erfindung geht aus von der DE 41 02 453 A1. In dieser ist eine Sauganlage für Brennkraftmaschinen mit einer längenänderbaren Saugleitung beschrieben. Die Saugleitung der Sauganlage ist in einen maschinenfesten Abschnitt und in einen bewegbar angeordneten, als Rohrkrümmer ausgestalteten Abschnitt ausgeführt. Zur Erzielung eines einfachen Aufbaues der Sauganlage wird vorgeschlagen, dass der Rohrkrümmer vom maschinenfesten Abschnitt gesondert stromauf der Mündung des maschinenfesten Abschnittes zur Längenänderung der Saugleitung bewegbar angeordnet ist. Hierzu ist auf der Rohrkrümmerinnenradiusseite eine Drehachse, über Stege vom Rohrkrümmer beabstandet, ausgebildet. Der Rohrkrümmer wird je nach Betriebszustand der Brennkraftmaschine um die Drehachse herum geschwenkt, wobei die Länge des gesamten Saugrohres um die Länge des Rohrkrümmers verlängert bzw. verkürzt wird.

Nachteilig an dieser Ausgestaltung ist der relativ große Bauraumbedarf aufgrund der Beabstandung des Rohrbogens zu der Drehachse.

Aufgabe der Erfindung ist es, eine kleine und kompakte Schwenkeinrichtung für eine längenänderbare Saugleitung darzustellen.

Diese Aufgabe wird durch die Merkmale im kennzeichnenden Teil des Patentanspruchs 1 gelöst.
Durch diese Ausgestaltung kann die Sauganlage in Anbetracht des Bauraums deutlich kleiner ausgelegt werden als bei Anordnungen mir großen Schwenkarmen. Diese Bauraumvorteile im Ansaugbereich machen die Integration einer Sauganlage in einem ohnehin engen Motorraum deutlich einfacher.

Zusätzlich zu dem verringerten Bauraum aufgrund der örtlichen Verlagerung der Drehachse wird ein weiterer Vorteil gemäß Anspruch 2 dadurch erzielt, dass der Saugrohrmittenverlauf bei dieser Ausgestaltung von einer Kreisbogenform fast beliebig abweichen kann. Somit ist die Saugrohrgeometrie einfach an die Innenkontur der Sauganlage anzupassen.

Eine Ausgestaltung nach Anspruch 3 verbessert das Einströmverhalten durch das Vermeiden von Strömungsverlusten in der längenänderbaren Saugleitung ganz deutlich. Die Reduzierung der Strömungsverluste führt zu höherer Motorleistung bei unter Umständen geringerem Verbrauch.

Eine Ausgestaltung nach Anspruch 4 führt zu einer sehr kompakten Anordnung der längenänderbaren Saugleitung in einer Sauganlage.

Nach den Ansprüchen 5 und 6 wird die Kraft, die zum Verstellen der längenänderbaren Saugleitung benötigt wird, über unterschiedliche Hebelarmlängen im Gleitmechanismus bzw. in einem Mehrgelenkgetriebe unterstützt. Durch die Verlegung der Antriebsachse und gleichzeitige Trennung von der Drehachse wird ein niedrigeres Antriebsmoment benötigt als bei herkömmlichen Schwenkanlagen. Daraus resultiert in vorteilhafter Weise entweder ein kleindimensionierter und damit kostengünstiger Stellmotor, oder bei gleicher Stellmotorgröße eine höhere Stellgeschwindigkeit.

Nach Anspruch 7 ist die Verwendung von fast jedem Stellelement möglich. Dazu gehören neben weiteren Schrittmotoren, Gleichstrommotoren bzw. auch Linearmotoren. Nach Anspruch 8 werden in vorteilhafter Weise sowohl die Drehachse als auch der Antrieb im Inneren der Sauganlage angeordnet. Somit müssen keinerlei Stellelemente bzw. Kraftübertragungselemente durch die luftdicht ausgelegte Sauganlage nach außen geführt werden.

Vorteilhafterweise wird nach Anspruch 9 die Koppelstelle zwischen dem festen Abschnitt des Saugrohres und dem schwenkbar angeordneten Abschnitt optimal abgedichtet. Das Ansaugen von Frischluft durch eine momentan falsche Saugrohrlänge wird somit vermieden.

Im Folgenden ist ein bevorzugtes Ausführungsbeispiel in einer einzigen Figur näher erläutert.

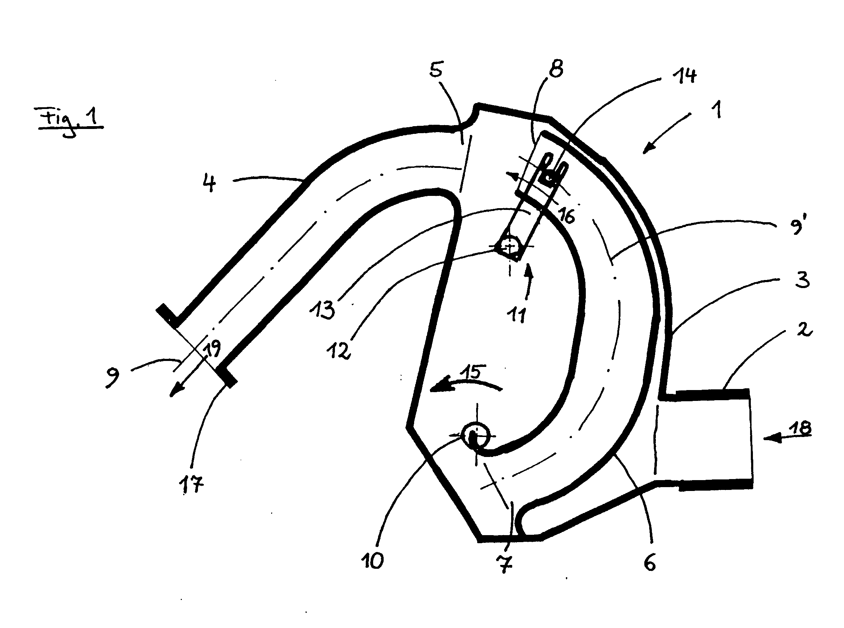

Figur 1 zeigt einen Schnitt durch eine Sauganlage 1, im wesentlichen bestehend aus einer Ansaugöffnung 2, die in einen Luftsammler 3 einmündet und einem festen Saugrohrabschnitt 4 mit einer Lufteinlassöffnung 5. Im Inneren des Luftsammlers 3 ist ein schwenkbarer Saugrohrabschnitt 6 mit einer Einströmöffnung 7 und einer Ausströmöffnung 8 angeordnet. Der feste Saugrohrabschnitt 4 hat eine Saugrohrlängsachse 9, der schwenkbare Saugrohrabschnitt 6 hat eine Saugrohrlängsachse 9'. Die Einströmöffnung 7 ist als Trichter ausgeformt, an dem eine Drehachse 10 befestigt ist. Im Bereich der Ausströmöffnung 8 ist ein Stellelement 11, bestehend aus einer Welle 12 mit einer Gleitkulisse 13 angeordnet. In der Gleitkulisse 13 wird ein Kulissenstein 14 geführt, der Bestandteil des schwenkbaren Saugrohrabschnittes 6 ist.

Bei Betrieb kann der schwenkbare Saugrohrabschnitt 6, wie der Name bereits sagt, um die Drehachse 10 geschwenkt werden. Hiermit wird die effektive Saugrohrlänge verändert.

Beim Betrieb der Brennkraftmaschine wird die Ansaugluft in einer Lufteinströmrichtung 18 durch die Ansaugöffnung 2 angesaugt, auftretende Luftpulsationen werden im Luftsammler 3 beruhigt, anschließend wird die Ansaugluft entweder je nach Einstellung durch den festen Saugrohrabschnitt 4 oder durch den festen Saugrohrabschnitt 4 und dem schwenkbaren Saugrohrabschnitt 6 in einer Luftausströmrichtung 19 der Brennkraftmaschine zugeführt.

Wie allgemein bekannt ist, ist ein Rohr für die darin befindliche Luftsäule ein Schwingsystem. Die Resonanzfrequenz hängt in erster Linie von der Länge des Rohres ab. Je kürzer die Rohrlänge, desto höherfrequent ist die Resonanzfrequenz des Schwingsystems. Bei hohen Drehzahlen einer Brennkraftmaschine werden aus diesem Grund kurze Saugrohre verwendet, um einen besseren Füllgrad des an die Sauganlage 1 angeschlossenen Zylinders der Brennkraftmaschine zu erhalten. Dies entspricht in der Figur 1 der Rohrlänge des festen Saugrohrabschnittes 4, von dessen Lufteinlassöffnung 5 bis zu einem Befestigungsflansch 17.

Füllgrad besagt, wie viel Luft der Kolben in den Zylinder ansaugt. Ein guter Füllgrad, viel Luft wird angesaugt, bedeutet eine bessere Leistungs- und Drehmomentabgabe der Brennkraftmaschine.

Wird die Brennkraftmaschine mit einer niedrigeren Drehzahl betrieben, wird die effektive Saugrohrlänge verlängert, damit der Füllgrad der Brennkraftmaschine wie zuvor bei hohen Drehzahlen verbessert wird. Das Verlängern der effektiven Saugrohrlänge erfolgt wie bereits erwähnt durch Schwenken des schwenkbaren Saugrohrabschnittes 6 in einer Schwenkrichtung 15 um die Drehachse 10. Dies erfolgt mit dem Stellelement 11, dessen Welle 12 von einem nicht dargestellten Schrittmotor in einer Stellrichtung 16 angetrieben wird. Der am schwenkbaren Saugrohrabschnitt 6 befestigte Kulissenstein 14 wird durch die Drehbewegung in der Kulisse mitgenommen, bis die Ausströmöffnung 8 auf der Lufteinlassöffnung 5 plan und luftdicht aufliegt.

Damit die effektive Saugrohrlänge durch Leckagen an der Koppelstelle nicht verändert wird, ist die Koppelstelle aus einem weichen Kunststoff ausgeführt. In dieser Saugrohrstellung strömt die von der Brennkraftmaschine angesaugte Luft durch die Ansaugöffnung 2 in der Lufteinströmrichtung 18, die Luftpulsationen werden ebenfalls im Luftsammler 3 beruhigt, weiter durch die Einströmöffnung 7, durch den schwenkbaren Saugrohrabschnitt 6, den festen Saugrohrabschnitt 4 und verlässt die Sauganlage 1 in der Luftausströmrichtung 19. Die effektive Saugrohrlänge beträgt nun die Strecke von der Einströmöffnung 7 bis zum Befestigungsflansch 17. Im angekoppelten Zustand bilden die Saugrohrlängsachse 9 und die Saugrohrlängsachse 9' eine gemeinsame einzige Saugrohrlängsachse.

Die gesamte Sauganlage 1 kann wie heute allgemein üblich, einstückig oder mehrstückig entweder aus Kunststoff oder aus Leichtmetall gefertigt sein. In dem hier dargestellten Ausführungsbeispiel sind der schwenkbare Saugrohrabschnitt 6 und die Drehachse 10 einstückig hergestellt, es ist jedoch auch möglich, die Drehachse 10 und den schwenkbaren Saugrohrabschnitt 6 getrennt herzustellen, und anschließend miteinander zu verbinden.

Der schwenkbare Saugrohrabschnitt 6 kann mit fast beliebigen Krümmungen ausgeführt sein, bzw. er kann auch entsprechend dem zur Verfügung stehenden Bauraum als ein weitestgehend gerades Rohrstück ausgelegt sein.

Anstelle des als Gleitkulisse ausgelegten Stellelementes 11, kann auch ein Mehrgelenkgetriebe verbaut werden.

Als Antrieb für die Welle 12 kann jeder handelsübliche Wellenantrieb verwendet werden. Dieser muss nicht rotatorisch arbeiten, sondern auch translatorische Verstelleinrichtungen sind hier möglich. Die Verstellung kann hydraulisch, pneumatisch oder elektromechanisch erfolgen.

Je nach zur Verfügung stehendem Bauraum können die Drehachse 10 und das Stellelement 11 auch auf den gegenüberliegenden Seiten des schwenkbaren Saugrohrabschnittes 6 angeordnet sein. Die Drehachse 10 muss darüber hinaus nicht direkt an der Einströmöffnung 7 angeordnet sein, sie kann auch weiter in Richtung der Ausströmöffnung 8 liegen, je nachdem welche Raumverhältnisse vorliegen.

### Bezugszeichenliste:

- 1: Sauganlage
- 2: Ansaugöffnung
- 3: Luftsammler
- 4: fester Saugrohrabschnitt
- 5: Lufteinlassöffnung
- 6: schwenkbarer Saugrohrabschnitt
- 7: Einströmöffnung
- 8: Ausströmöffnung
- 9, 9': Saugrohrlängsachse
- 10: Drehachse
- 11: Stellelement
- 12: Welle
- 13: Gleitkulisse
- 14: Kulissenstein
- 15: Schwenkrichtung
- 16: Stellrichtung
- 17: Befestigungsflansch
- 18: Lufteinströmrichtung
- 19: Luftausströmrichtung

## Patentansprüche

1. Sauganlage (1) für eine Brennkraftmaschine mit zumindest einem längenänderbaren Saugrohr mit einer Saugrohrlängsachse (9), bestehend aus einem zu Brennkraftmaschine festem Saugrohrabschnitt (4) mit einer Lufteinlassöffnung (7) und einem, um eine normal zur Saugrohrlängsachse angeordneten Drehachse schwenkbar angeordnetem Saugrohrabschnitt (6) einer Einströmöffnung (7) und einer Ausströmöffnung (8), der durch Schwenken um die Drehachse (10) mit der Ausströmöffnung (8) an die Lufteinlassöffnung (5) ankoppelbar ist,
**dadurch gekennzeichnet, dass** die Drehachse (10) direkt an dem schwenkbar angeordneten Saugrohabschnitt (6), näher an der Einströmöffnung (7) als an der Ausströmöffnung (8), angeordnet ist.

2. Sauganlage nach Anspruch 1,
**dadurch gekennzeichnet, dass** der schwenkbar angeordnete Saugrohrabschnitt (6) als Rohrbogen ausgeführt ist.

3. Sauganlage nach Anspruch 1,
**dadurch gekennzeichnet, dass** die Einströmöffnung (7) als Trichter ausgebildet ist.

4. Sauganlage nach Anspruch 1,
**dadurch gekennzeichnet, dass** die Drehachse (10) an zumindest einer Einströmöffnung (7) angeordnet ist.

5. Sauganlage nach zumindest einem der zuvor genannten Ansprüche,
**dadurch gekennzeichnet, dass** die Verstellung des schwenkbar angeordneten Saugrohrabschnittes durch ein Stellelement (11) erfolgt.

6. Sauganlage nach zumindest einem der zuvor genannten Ansprüche,
**dadurch gekennzeichnet, dass** das Stellelement (11) eine Gleitkulisse oder ein Mehrgelenkgetriebe ist.

7. Sauganlage nach zumindest einem der zuvor genannten Ansprüche,
**dadurch gekennzeichnet, dass** das Stellelement (11) translatorisch oder rotatorisch verstellbar ist.

8. Sauganlage nach zumindest einem der zuvor genannten Ansprüche,
**dadurch gekennzeichnet, dass** die Drehachse (10) und das Stellelement (11) auf der selben Seite des schwenkbar angeordneten Saugrohrabschnittes (6) angeordnet sind.

9. Sauganlage nach zumindest einem der zuvor genannten Ansprüche,
**dadurch gekennzeichnet, dass** die Lufteinlassöffnung (5) und/oder die Ausströmöffnung (8) aus einem elastischen Material gefertigt ist.

## Claims

1. A suction system (1) for an internal combustion engine with at least one variable-length suction pipe having a longitudinal axis (9) and comprising a portion (4) fixed to the engine, an air inlet opening (7), and a portion (6) pivotable around an axis at right angles to the longitudinal axis of the suction pipe, with an inflow opening (7) and an outflow opening (8) and adapted to be coupled to the air inlet opening (5) by rotating the outflow opening (8) around the pivot (10),
**characterised in that** the pivot (10) is mounted directly on the pivotable pipe portion (6), nearer the inflow opening (7) than to the outflow opening (8).

2. A suction system according to claim 1, **characterised in that** the pivotable pipe portion (6) is a pipe bend.

3. A suction system according to claim 1, **characterised in that** the inflow opening (7) is a funnel.

4. A suction system according to claim 1, **characterised in that** the pivot (10) is disposed on at least one inflow opening (7).

5. A suction system according to at least one of the previous claims, **characterised in that** the pivotable pipe portion is adjustable by an adjusting element (11).

6. A suction system according to at least one of the previous claims, **characterised in that** the adjusting element (11) is a sliding link or a multi-link drive.

7. A suction system according to at least one of the previous claims, **characterised in that** the adjusting element (11) is movable in translation or rotation.

8. A suction system according to at least one of the previous claims, **characterised in that** the pivot (10) and the adjusting element (11) are disposed on the same side of the pivotable pipe portion (6).

9. A suction system according to at least one of the previous claims, **characterised in that** the air inlet opening (5) and/or the outflow opening (8) are made of an elastic material.

## Revendications

1. Système d'admission (1) pour un moteur à combustion interne, comportant au moins une tubulure d'admission à longueur modifiable présentant un axe longitudinal de tubulure d'admission (9) composé d'un segment de tubulure d'admission (4) fixe par rapport au moteur à combustion interne, comportant une prise d'air [5] et un segment de tubulure d'admission (6) disposé de façon à pivoter autour d'un axe de rotation disposé à la normale de l'axe longitudinal de la tubulure d'admission, comportant un orifice d'admission (7) et un orifice d'écoulement (8) qui peut être couplé à la prise d'air (5) par pivotement autour de l'axe de rotation (10) lié à l'orifice d'écoulement (8),
**caractérisé en ce que**
l'axe de rotation (10) est placé directement sur le segment de tubulure d'admission (6) disposé de façon à pivoter, plus près de l'orifice d'admission (7) que de l'orifice d'écoulement (8).

2. Système d'admission selon la revendication 1,
**caractérisé en ce que**
le segment de tubulure d'admission (6) disposé de façon à pivoter est conçu en tant que raccord coudé.

3. Système d'admission selon la revendication 1,
**caractérisé en ce que**
l'orifice d'admission (7) est formé en entonnoir.

4. Système d'admission selon la revendication 1,
**caractérisé en ce que**
l'axe de rotation (10) est disposé sur au moins un orifice d'admission (7).

5. Système d'admission selon au moins l'une des revendications précédentes,
**caractérisé en ce que**
le déplacement du segment de tubulure d'admission disposé de façon à pivoter est réalisé par un élément de réglage (11).

6. Système d'admission selon au moins l'une des revendications précédentes,
**caractérisé en ce que**
l'élément de réglage (11) est une coulisse ou un mécanisme à plusieurs articulations.

7. Système d'admission selon au moins l'une des revendications précédentes,
**caractérisé en ce que**
l'élément de réglage (11) peut être déplacé en translation ou en rotation.

8. Système d'admission selon au moins l'une des revendications précédentes,
**caractérisé en ce que**
l'axe de rotation (10) et l'élément de réglage (11) sont disposés du même côté du segment de tubulure d'admission (6) disposé de façon à pivoter.

9. Système d'admission selon au moins l'une des revendications précédentes,
**caractérisé en ce que**
la prise d'air (5) et/ou l'orifice d'écoulement (8) sont fabriqués en un matériau élastique.
